# EUROPÄISCHE PATENTSCHRIFT

(11) **EP 1 203 652 B1**
(45) Veröffentlichungstag und Bekanntmachung des Hinweises auf die Patenterteilung: **10.12.2003**
(21) Anmeldenummer: 01121314.7
(22) Anmeldetag: 06.09.2001
(51) Int. Cl.: B29C 70/08, B29C 70/12, B29C 33/42

(54) **Verfahren zum Herstellen eines Kunststoffbauteiles**
Method of manufacturing a plastic part
Procédé pour la fabrication d'un composant en matière plastique

(30) Priorität: 03.11.2000 DE 10054490
(43) Veröffentlichungstag der Anmeldung: 08.05.2002
(73) Patentinhaber: Bayerische Motoren Werke Aktiengesellschaft, 80809 München (DE)
(72) Erfinder: Telgenbrok, Peter, 84028 Landshut (DE); Conze, Michael, 84034 Landshut (DE)

(56) Entgegenhaltungen:
- EP-A- 0 367 412
- US-A- 4 664 862

## Beschreibung

Die Erfindung betrifft ein Verfahren zum Herstellen eines Kunststoffbauteiles, insbesondere eines Strukturteils oder Ausstattungsteiles für ein Fahrzeug, wobei auf eine vorgefertigte Kunststoff-Folie ein mit Fasern versehenes Kunststoffmaterial aufgetragen wird solch ein Verfahren wird zum Beispeil in der Patentschrift US-A-4 664 862 beschrieben. Dabei ist die Verwendungsmöglichkeit von Kunststoff-Lackfolie im Zusammenhang mit der für den Fachmann an sich durchaus üblichen Hinterspritztechnik sowohl beim Dekorhinterspritzen (abgekürzt auch als IMD bezeichnet) als auch beim In-Mould-Labeling (IML) bekannt. Bekannt wurde dabei bislang jedoch nur die Herstellung kleiner Bauteile mit relativ geringer Wandstärke, wie bspw. Handygehäuse oder Dekorleisten in Automobilen. Die hierfür eingesetzten Werkstoffe weisen dabei eine hinreichend geringe Viskosität auf, damit Probleme wie Faltenbildung und Durchspritzen der Folien vermieden werden.

Nach bisherigen Erkenntnissen ist das Hinterspritzen von einer vorgefertigten Kunststoff-Folie, insbesondere Lackfolie, mit unverstärktem Kunststoffmaterial praktisch nur für Verkleidungsteile einsetzbar. Die hiermit erzielbaren relativ geringen mechanischen Kenngrößen oder Eigenschaften von unverstärkten Werkstoffen sind jedoch nicht für alle wünschenswerterweise solchermaßen zu fertigenden Bauteile, wie bspw. Fahrzeug-Strukturbauteile ausreichend. Dabei ist es durchaus erstrebenswert, bspw. Fahrzeug-Strukturbauteile oder dgl. durch Fertigungs-Prozesse herzustellen, die dem Spritzgießen ähnlich sind, nämlich bspw. durch Spritzprägen oder Hinterpressen (SMC, GMT) einer Kunststoff-Folie, insbesondere Kunststoff-Lackfolie.

Beim Versuch, auf Kunststoff-Lackfolien faserverstärktes, d.h. mit Fasern versehenes Kunststoffmaterial nach einem der soeben beispielhaft genannten Fertigungsprozesse aufzutragen, hat sich gezeigt, dass sich die Fasern auf der Oberfläche des fertigen Kunststoffbauteiles abzeichnen, d.h. diese Fasern sind teilweise quasi durch die Kunststoff-Folie hindurch (und zwar von der dem faserverstärkten Kunststoffmaterial abgewandten Seite aus blickend) erkennbar. Dies ist insbesondere bei Kunststoff-Bauteilen, die eine relativ hohe Oberflächenqualität aufweisen sollen, störend, da der Glanzgrad und das Erscheinungsbild der Oberfläche durch die sich abzeichnenden Fasern nachhaltig beeinträchtigt werden. Eine derartige Verarbeitung von Kunststoff-Lackfolie in Kombination mit langfaserverstärkten Kunststoffen scheint daher derzeit nicht möglich.

Eine Abhilfemaßnahme für diese geschilderte Problematik aufzuzeigen, ist Aufgabe der vorliegenden Erfindung.
Die Lösung dieser Aufgabe ist im gekennzeichneten Teil des Anspruchs 1 definiert. Vorteilhafte Weiterbildungen sind Inhalt der Unteransprüche.

Erfindungsgemäß soll verhindert werden, dass sich die im auf die Kunststoff-Folie aufzubringenden Kunststoffmaterial enthaltenen Fasern an der dieser Seite abgewandten sichtbaren Folien-Oberfläche abzeichnen, was grundsätzlich dadurch erreicht werden kann, dass diese Fasern durch eine geeignete Prozessführung daran gehindert werden, zu nah an diese besagte sichtbare Oberfläche heranzukommen. Der einfachste Ansatz für eine solche Prozessführung besteht darin, die Dicke der Kunststoff-Folie so weit zu erhöhen, bis sich keine Fasern mehr abzeichnen. Dies ist aber jedoch nur bedingt sinnvoll, da bei Verwendung zu dicker Kunststoff-Folien die mechanische Eigenschaften des Bauteils in eine unerwünschte Richtung verschoben werden.

Der zielführendere, der vorliegenden Erfindung zugrunde liegende Ansatz besteht nun darin, dass den Fasern, die naturgemäß eine bestimmte Mindestlänge aufweisen, beim Aufbringen auf die Kunststoff-Folie in der Kunststoffmasse lediglich eine eingeschränkte Beweglichkeit zugestanden wird. Gestaltet man erfindungsgemäß die der Kunststoff-Folie zugewandte Werkzeugfläche derart, dass sog. Erhebungen oder Stege mit relativ geringen geometrischen Abmessungen in die Kavität des verwendeten Werkzeuges hineinreichen, so werden - wie sich gezeigt hat - beim Einbringen der faserverstärkten Kunststoffmasse die demgegenüber relativ langen Fasern durch diese Erhebungen/Stege von der sichtbaren Folien-Oberfläche - hierbei handelt es sich um die der Kunststoffmasse mit den Fasern abgewandte Folien-Oberfläche) in einem gewissen Abstand gehalten, der ausreichend ist, dass sich die Fasern auf der sichtbaren Folien-Oberfläche nicht abzeichnen.

Durch die besagten Erhebungen oder Stege wird beim Herstellungsprozess selbstverständlich zunächst die Kunststoff-Folie selbst verformt, und zwar derart, dass sich auf der später sichtbaren Bauteil-Oberfläche oder Folien-Oberfläche -( hierbei handelt es sich um die der besagten Werkzeugfläche zugewandte Seite der Kunststoff-Folie )- eine Narbung ausbildet. Diese Narbung soll nun jedoch erfindungsgemäß derart fein sein, dass sie mit bloßem Auge zumindest bei üblichem Betrachtungs-Abstand nicht sichtbar ist (sog. "Mini-Narbung"). Dann erweckt die Bauteil- oder Folien-Oberfläche bei Betrachtung mit bloßem Auge (d.h. ohne Verwendung eines Vergrößerungsglases oder dgl.) bei üblichem Abstand weiterhin einen gewünschten glatten Eindruck, wie er an Kunststoff-Folien, insbesondere Kunststoff-Lackfolien üblich ist.

Selbstverständlich sind die relevanten geometrischen Abmessungen zur Erzielung der besagten Effekte geeignet zu wählen, d.h. insbesondere sollten die Stege oder Erhebungen an der Werkzeugfläche, durch welche an der Kunststoff-Folie sog. zurückversetzte Abschnitte (der sog. "Mini-Narbung") gebildet werden, von relativ geringer Abmessung sein. Es hat sich nämlich gezeigt, dass hierdurch die besagte Verdrängungswirkung gegenüber den im auf die Kunststoff-Folie aufzubringenden Kunststoffmaterial enthaltenen Fasern relativ hoch ist, insbesondere wenn übliche Faserlängen zum Einsatz kommen. Im wesentlichen sollten somit die Erhebungen oder Stege der Werkzeugfläche in ihren Breitenabmessungen derart auf die Länge der Fasern abgestimmt sein, dass sich die Fasern auch durch die aufgrund der Erhebungen oder Stege dünneren oder zurückversetzten Abschnitte der Kunststoff-Folie hindurch nicht abzeichnen. Gleichzeitig werden aufgrund der relativ kleinen Stege oder Erhebungen an der Werkzeugfläche die zurückversetzten Abschnitte der Folien-Oberfläche kaum mehr sichtbar, so dass sich die entstehende sog. "Mini-Narbung" dem Betrachter nicht offenbart.

Das letztgenannte Ziel lässt auch dadurch optimal erreichen, dass die sog. erhabenen Abschnitte der Kunststoff-Folie, die durch die zwischen den Erhebungen oder Stegen der Werkzeugfläche liegenden Täler herausgebildet werden, gegenüber den zurückversetzten Abschnitten der Folien-Oberfläche relativ großflächig sind. Auf der sichtbaren Oberfläche der Kunststoff-(Lack)-Folie bzw. auf der sichtbaren Bauteil-Oberfläche werden somit großflächige Bereiche geschaffen, die qualitativ hochwertige optische Eigenschaften haben. Bevorzugt können diese erhabenen Abschnitte der Folie-Oberfläche bzw. die sog. Täler der Werkzeugfläche einen mittleren Durchmesser oder eine Kantenlänge in der Größenordnung von 0,5 mm bis 2,0 mm haben.

Mit den zwischen den relativ großflächigen erhabenen Folien-Oberflächen-Abschnitten liegenden zurückversetzten Abschnitten ergibt sich hinsichtlich der mechanischen Kennwerte in Summe jedoch weiterhin eine relativ geringe Foliendicke. Insgesamt lässt sich somit weiterhin die Folie relativ dünn halten, so dass das entstehende Bauteil als Ganzes relativ hohe mechanischen Kennwerte (bezogen auf eine im wesentlichen unveränderte Bauteilwanddicke) aufweisen kann, und zwar aufgrund der Schicht von faserverstärkter Kunststoffmasse. Hinsichtlich der Abmessungen der zurückversetzten Folien-Oberfläche-Abschnitte bzw. der entsprechenden Breitenabmessungen der Stege oder Erhebungen am Werkzeug hat es sich als vorteilhaft herausgestellt, wenn diese in der Größenordnung vom 0,1-fachen bis zum 0,35-fachen der soeben genannten Längenmaße der an der Werkzeugfläche vorgesehenen Täler liegen. Dann kann auch das Kriterium erfüllt werden, dass die daraus resultierenden zurückversetzten Folien-Oberflächen-Abschnitte ab einem bestimmten Abstand des menschlichen Auges von der sichtbaren Folien-Oberfläche vom Auge nicht mehr auflösbar sind.

Hinsichtlich der mechanischen Eigenschaften der Kunststoff-Folie (in diesem Zusammenhang ist auch die mechanische Belastung der Erhebungen oder Stege der Werkzeugfläche durch Fließvorgänge der aufgebrachten faserverstärkten Kunststoffmasse und durch die auftretenden Drücke zu berücksichtigen) hat es sich als günstig erwiesen, wenn die Höhe der Erhebungen oder Stege bzw. die Tiefe der Täler in der Größenordnung des 1-fachen bis 4-fachen der Breitenabmessung der Stege oder Erhebungen liegt, wobei im Hinblick auf eine einfache Fertigung der entsprechenden Kunststoff-Folie bei gleichzeitig guter Optik die die Täler an der Werkzeugfläche oder die durch diese an der sichtbaren Bauteil- oder Folien-Oberfläche herausgebildeten erhabenen Abschnitte in Draufsicht im wesentlichen die Form von Rechtecken oder Kreisen besitzen können, wobei jedoch auch beliebige andere (geometrische) Figuren möglich sind, bspw. auch quasi miteinander verzahnte sog. "Escher-Figuren".

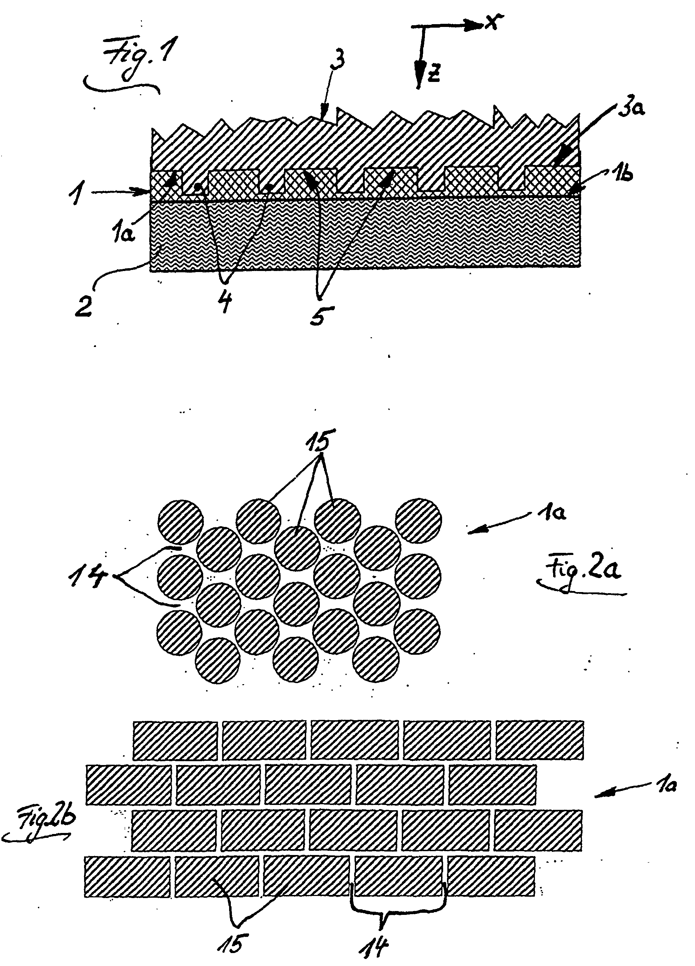

Solchermaßen gestaltete Ausführungsbeispiele werden im folgenden anhand der beigefügten Prinzipskizzen kurz beschrieben. Dabei ist in **Figur 1** ein Querschnitt eines erfindungsgemäß hergestellten Kunststoffbauteiles zusammen mit dem der Kunststoff-Folie zugewandten Werkzeug gezeigt, während in den **Figuren 2a, 2b** zwei Folien-Varianten in Draufsicht dargestellt sind, d.h. gemäß Ansicht Z aus Fig.1 sind zwei Varianten der sichtbaren Folien-Oberfläche dargestellt.

Mit der Bezugsziffer 1 ist eine vorgefertigte Kunststoff-Lackfolie bezeichnet, deren Oberfläche 1a am fertigen Kunststoffbauteil sichtbar ist. Auf die dieser sichtbaren Folien- oder Bauteil-Oberfläche 1a gegenüberliegende Seite 1b der Kunststoff-Folie 1 wird in einem nicht detailliert dargestellten geeigneten Werkzeug bspw. nach einem Spritzprägeverfahren oder einem Hinterpressverfahren eine Schicht von mit Fasern versehenem oder verstärkten Kunststoffmaterial 2 aufgebracht. Hierzu wird zunächst die Kunststoff-Folie 1 in das Werkzeug eingelegt, und zwar derart, dass die später sichtbare Folien-Oberfläche 1a an einer Werkzeugfläche 3a, mit der ein sog. Oberwerkzeug 3 einer bzw. der Werkzeug-Kavität zugewandt ist, anliegt. Anschließend wird das Werkzeug geschlossen, d.h. bevorzugt wird das Oberwerkzeug 3 zu einem nicht dargestellten Unterwerkzeug verfahren, wonach in die Werkzeug-Kavität das faserverstärkte Kunststoffmaterial 2 eingebracht wird, das sich daraufhin mit der Kunststoff-Folie verbindet (und diese dabei gegen die Werkzeugfläche 3a presst).

Wie ersichtlich ist die der sichtbaren Folien-Oberfläche 1a zugewandte Werkzeugfläche 3a mit Stegen oder Erhebungen 4 versehen, zwischen denen sich Täler 5 befinden. Durch diese Formgebung des Oberwerkzeuges 3 bildet sich während des Herstellungsprozesses auf der sichtbaren Bauteiloder Folien-Oberfläche 1a eine Narbung aus. Wie oben ausführlich beschrieben sind die Abmessungen der Stege oder Erhebungen 4 dabei derart gewählt, dass diese Narbung (auch als "Mini-Narbung" bezeichnet) bei üblichem Abstand von der Bauteil- oder Folien-Oberfläche 1a mit bloßem Auge nicht sichtbar ist, d.h. dass diese Folien-Oberfläche 1a einen glatten Eindruck erweckt. Wie ebenfalls ausführlich beschrieben wurde, zeichnen sich dann die im Kunststoffmaterial 2 enthaltenen Fasern nicht auf der sichtbaren Folien-Oberfläche 1a ab.

Wie weiter bereits angegeben wurde, haben die Täler 5, die sich zwischen den Erhebungen oder Stegen 4 der Werkzeugfläche 3a befinden, und folglich auch die sich im Bereich der Täler 5 in der Kunststoff-Folie 1 herausbildenden sog. erhabenen Abschnitte der Folien-Oberfläche 1a eine(n) in Parallelrichtung zur Folien-Seite 1b (= Richtung x des dargestellten Koordinatensystems) gemessenen mittleren Durchmesser oder Kantenlänge in der Größenordnung von 0,5 mm bis 2,0 mm. Die ebenfalls in x-Richtung definierte Breitenabmessung der Stege oder Erhebungen 4 der Werkzeugfläche 3a, durch die an der sichtbaren Bauteil- oder Folien-Oberfläche 1a zurückversetzte Abschnitte herausgebildet werden, liegt bevorzugt in der Größenordnung vom 0,1-fachen bis zum 0,35-fachen der soeben genannten Längenmaße der Täler 5 oder erhabenen Folien-Oberflächen-Abschnitte. Die senkrecht zur Parallelrichtung zur Folien-Seite 1b und somit in z-Richtung des dargestellten Koordinatensystems gemessene Tiefe der Täler 5 oder die Höhe der Stege oder Erhebungen 4 an der Werkzeugfläche 3a liegt dabei bevorzugt in der Größenordnung des 1-fachen bis 4-fachen der soeben genannten Breitenabmessung der Erhebungen oder Stege 4.

Grundsätzlich kann die Form der Erhebungen oder Stege 4, d.h. deren sich in Fig. 1 senkrecht zur Zeichenebene erstreckende Gestalt unterschiedlich sein. Mögliche bzw. bevorzugte Ausführungsbeispiele sind in den Figuren 2a, 2b dargestellt, die jeweils eine Aufsicht auf die sichtbare Bauteil- oder Folienoberfläche 1a (des fertigen, erfindungsgemäß hergestellten Kunststoffbauteils) zeigen. Mit der Bezugsziffer 15 sind dabei die sich aufgrund der an der Werkzeugfläche 3 vorgesehenen Täler 5 bildenden sog. erhabenen Abschnitte der Kunststoff-Folie 1 bezeichnet, die generell schraffiert dargestellt sind. Die dazwischen liegenden zurückversetzten Oberflächen-Abschnitte 14 werden durch die Stege oder Erhebungen 4 der Werkzeugfläche 3a gebildet. Wie ersichtlich können die sog. erhabenen Abschnitte 15 die Form von Rechtecken oder Kreisen besitzen.

Generell lassen sich mit dem erfindungsgemäßen Verfahren einfach und mit hoher Oberflächenqualität optisch ansprechende Kunststoff-Bauteile herstellen, die sich aufgrund des faserverstärkten Kunststoffmaterials 2 bei geringen Dicken- oder Höhenabmessungen (in z-Richtung gemessen) durch eine hohe Festigkeit, d.h. durch günstige mechanische Eigenschaften auszeichnen. Bei Verwendung einer vorgefertigten Kunststoff-Lack-Folie 1 ist kein nachträglicher Lackiervorgang erforderlich, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Verfahren zum Herstellen eines Kunststoffbauteiles, insbesondere eines Strukturteiles oder Ausstattungsteiles für ein Fahrzeug, wobei in einem geeigneten Werkzeug auf eine Kunststoff-Folie (1) ein mit Fasern versehenes Kunststoffmaterial (2) aufgetragen wird,
**dadurch gekennzeichnet, dass** die der Kunststoff-Folie (1) zugewandte Werkzeugfläche (3a) mit Stegen oder Erhebungen (4) versehen ist, zwischen denen sich Täler (5) befinden, so dass sich auf der sichtbaren Bauteil-Oberfläche (1a) eine Narbung ausbildet, die jedoch derartige Abmessungen besitzt, dass diese Bauteil-Oberfläche oder Folien-Oberfläche (1) bei Betrachtung mit bloßem Auge einen glatten Eindruck erweckt, wobei die zwischen den Erhebungen oder Stegen (4) der Werkzeugfläche (3a) liegenden Täler (5), im Bereich derer ein erhabener Abschnitt (15) der Kunststoff-Folie (1) herausgebildet wird, einen mittleren Durchmesser oder eine Kantenlänge in der Größenordnung von 0,5 mm bis 2,0 mm haben, während die Breitenabmessung der Stege oder Erhebungen (4) der Werkzeugfläche (3a), durch die an der sichtbaren Bauteil- oder Folien-Oberfläche (1a) zurückversetzte Abschnitte (14) herausgebildet werden, in der Größenordnung vom 0,1-fachen bis zum 0,35-fachen der genannten Längenmaße der Täler (5) liegen.

2. Herstellverfahren nach Anspruch 1,
**dadurch gekennzeichnet, dass** die Tiefe der Täler (5) oder die Höhe der Stege oder Erhebungen (4) an der Werkzeugfläche (3a) in der Größenordnung des 1-fachen bis 4-fachen der Breitenabmessung der Erhebungen oder Stege (4) liegt.

3. Herstellverfahren nach Anspruch 1 oder 2,
**dadurch gekennzeichnet, dass** die Täler (5) an der Werkzeugfläche (3a) oder die durch diese an der sichtbaren Bauteil- oder Folien-Oberfläche (1 a) herausgebildeten erhabenen Abschnitte (15) in Draufsicht im wesentlichen die Form von Rechtecken oder Kreisen oder anderen geometrischen Figuren besitzen.

4. Herstellverfahren nach einem der vorangegangenen Ansprüche,
**dadurch gekennzeichnet, dass** das Aufbringen des mit Fasern versehenen Kunststoffmaterials (2) nach einem Spritzpräge-Verfahren oder Hinterpress-Verfahren erfolgt.

## Claims

1. A method of producing a plastics material component, especially a structural or decorative part for a vehicle, wherein a fibre-containing plastics material (2) is applied in a suitable mould to a plastics material sheet (1),
**characterised in that** the surface (3a) of the mould facing the plastics material sheet (1) is formed with webs or raised portions (4) with troughs (5) between them, so that a grain is formed on the visible surface (1a) of the component but has dimensions such that the surface (1) of the component or foil appears to be smooth when viewed with the naked eye, wherein the troughs (5) between the raised portions or webs (4) on the mould surface (3a), where a raised portion (15) of the plastics material sheet (1) is formed, have an average diameter or edge length of the order of 0.5 to 2.0 mm, whereas the width of the webs or raised portions (4) of the mould surface (3a) formed by the portions (14) set back on the visible surface (1 a) of the component or sheet is of the order of 0.1 to 0.35 times the said length of the troughs (5).

2. A method of production according to claim 1,
**characterised in that** the depth of the troughs (5) or the height of the webs or raised portions (4) of the mould surface (3a) is of the order of 1 to 4 times the width of the raised portions or webs (4).

3. A method of production according to claim 1 or claim 2,
**characterised in that** the troughs (5) on the mould surface (3a) or the raised portions (15) formed by the troughs on the visible surface (1 a) of the component or sheet, in plan view, are substantially in the shape of rectangles, circles or other geometrical figures.

4. A method of production according to any of the preceding claims,
**characterised in that** the fibre-containing plastics material (2) is applied by compression moulding or in-mould pressing.

## Revendications

1. Procédé pour fabriquer un composant en matière plastique, en particulier une pièce de structure ou une pièce d'équipement pour un véhicule, pour lequel dans un outil adapté on applique sur une feuille en matière plastique (1) un matériau en matière plastique (2) muni de fibres,
**caractérisé en ce que**
la surface d'outil (3a) orientée vers la feuille en matière plastique (1) est munie de nervures ou de bosses (4) entre lesquelles se trouvent des creux (5) de sorte que sur la surface de pièce (1a) visible se forme une cannelure qui possède cependant des dimensions telles que cette surface de pièce ou surface de feuille (1) donne l'impression d'être plate à l'oeil nu, les creux (5) situés entre les bosses ou nervures (4) de la surface d'outil (3a), dont la zone forme un segment relevé (15) de la feuille en matière plastique (1), ayant un diamètre moyen ou une longueur d'arête d'ordre de grandeur compris entre 0,5 et 2,0 mm tandis que les dimensions de largeur des nervures ou des bosses (4) de la surface d'outil (3a) qui forment des segments (14) en retrait sur la surface visible de composant ou de feuille (1a) ont une grandeur comprise entre 0,1 fois et 0,35 fois ladite dimension de longueur des creux (5).

2. Procédé de fabrication selon la revendication 1,
**caractérisé en ce que**
la profondeur des creux (5) ou la hauteur des nervures ou des bosses (4) sur la surface d'outil (3a) a un ordre de grandeur compris entre 1 fois et 4 fois ladite dimension de largeur des bosses ou nervures (4).

3. Procédé de fabrication selon la revendication 1 ou 2,
**caractérisé en ce que**
les creux (5) sur la surface d'outil (3a) ou les segments relevés (15) formés par ceux-ci sur la surface visible de composant ou de feuille (1a) vus de dessus possèdent pratiquement la forme de rectangles ou de cercles ou d'autres figures géométriques.

4. Procédé de fabrication selon l'une des revendications précédentes,
**caractérisé en ce que**
l'application du matériau en matière plastique (2) muni de fibres est réalisée selon un procédé d'estampage par injection ou selon un procédé de pressage arrière.
